(19) Europäisches Patentamt / European Patent Office / Office européen des brevets

(11) **EP 3 622 260 B1**

(12) **EUROPEAN PATENT SPECIFICATION**

(45) Date of publication and mention of the grant of the patent:
**01.05.2024   Bulletin 2024/18**

(21) Application number: **18797585.9**

(22) Date of filing: **08.05.2018**

(51) International Patent Classification (IPC):
**G01G 19/03** *(2006.01)*       **G01G 19/02** *(2006.01)*

(52) Cooperative Patent Classification (CPC):
**G01G 19/021; G01G 19/024**

(86) International application number:
**PCT/SE2018/050476**

(87) International publication number:
**WO 2018/208212 (15.11.2018 Gazette 2018/46)**

(54) **A PROCESSING DEVICE FOR A WEIGHING SCALE AND METHODS THEREOF**

VERARBEITUNGSVORRICHTUNG FÜR EINE WAAGE UND VERFAHREN DAFÜR

DISPOSITIF DE TRAITEMENT DE BALANCE DE PESAGE ET PROCÉDÉS ASSOCIÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.05.2017   SE 1750568**

(43) Date of publication of application:
**18.03.2020   Bulletin 2020/12**

(73) Proprietor: **Motus Weighing AB**
**411 25 Göteborg (SE)**

(72) Inventor: **VALDEMARSSON, Stefan**
**531 98 Lidköping (SE)**

(74) Representative: **Ehrner & Delmar Patentbyrå AB**
**Drottninggatan 33, plan 4**
**111 51 Stockholm (SE)**

(56) References cited:
**WO-A2-2009/146960        GB-A- 2 178 179**
**JP-A- 2012 145 557        US-A- 4 492 280**
**US-A- 6 137 066        US-B1- 6 459 050**

## Description

### Technical Field

The present invention relates to a processing device for a weighing scale. Furthermore, the present invention also relates to corresponding methods.

### Background

Road vehicles or railway vehicles are typically weighed to determine that the weight does not exceed limitations set by regulators, such as maximum axle weights or total weight of a vehicle on roads, railroads or bridges. Another typical application is to determine the cargo weight of the loaded vehicle.

A first group of conventional systems comprise weighing scales with relatively short weighing bridge, i.e. shorter than the wheelbase of the vehicle. These conventional systems typically have a weighing bridge with a length of < 1 m, shorter than the typical distance between axles ($\approx$ 1.3 m) of a bogie of a common vehicle such as lorry and/or a truck, and monitor or weigh the weight of one axle at a time. The weight of each individual axle and the total weight of the vehicle can then be determined by weighing multiple times and combining the results. A drawback with these scales is the bad accuracy, where the error at the best conditions may be in the range of $\pm$ 1% on average and at worse conditions as high as $\pm$ 8%.

A second group of conventional systems comprise weighing scales with a relatively long weighing bridge, i.e. longer than or equal to the wheelbase of the vehicle, where more than one axle of the vehicle may be on the weighing bridge simultaneously. For these weighing scales, when used as weigh in motion scales, there is a drawback of finding the correct weight of each individual axle and the total weight of the vehicle. This further presents the drawback of how to determine different points in time when wheels of an axel and/or a second axle enter the first side of the weighing bridge or leave the second side of the weighing bridge. This is particularly difficult to determine when the wheelbase of the vehicle substantially matches the length of the weighing bridge such that points in time when the axles of the vehicle enter or leave the weighing bridge occur closely in time. A further difficulty arises when the axel weights are substantially the same. Conventional systems therefore have difficulty in separating different axle load weighing states, in particular to determine a reliable point in time when wheels of a vehicle enter a first side of the weighing bridge or leave the second side of the weighing bridge.

A further drawback of conventional systems is that they require additional complex components, such as tape switches, cameras, radars or other position/speed sensing systems, to determine said points in time, thereby increasing the probability for failure and reducing robustness.

Document JP 2012 145557 A discloses a processing device for a weighing scale, wherein the processing device is configured to: obtain a first axle positioning sensing signal indicating when wheels of a vehicle enter a first side of a weighing bridge, wherein the first side is an entering side for the vehicle, obtain a second axle positioning sensing signal indicating when wheels of the vehicle leave a second side of the weighing bridge, wherein the second side is a leaving side for the vehicle, obtain samples of a weight signal associated with the first axle positioning sensing signal and the second axle positioning sensing signal; and compute at least one of an axle weight for the vehicle and a total weight for the vehicle based on the non-discarded samples of the weight signal.

### Summary

An objective of embodiments of the present invention is to provide a solution which mitigates or solves the drawbacks and problems of conventional solutions.

In addition, an objective of embodiments of the invention is to provide a solution which determines transitional time periods when axles of a vehicle are entering and/or leaving a weighing bridge.

The above objectives are solved by the subject matter of the independent claims. Further advantageous implementation forms of the present invention can be found in the dependent claims.

According to a first aspect of the invention, the above mentioned and other objectives are achieved with a processing device for a weighing scale, the processing device being configured to at least one of:

> obtain a first signal indicating when wheels of a vehicle enter a first side of a weighing bridge, wherein the first side is an entering side for the vehicle,
> determine a first threshold signal based on and associated with the first signal,
> determine at least one first transitional time period when wheels of the vehicle enter the first side based on the first signal and the first threshold signal; and
> obtain a second signal indicating when wheels of the vehicle leave a second side of the weighing bridge, wherein the second side is a leaving side for the vehicle,
determine a second threshold signal based on and associated with the second signal,
determine at least one second transitional time period when wheels of the vehicle leave the second side based on the second signal and the second threshold signal.

The first signal and the second signal could herein be understood to be axle positioning sensing signals, which indicate when axles of a vehicle are entering and leaving a weighing bridge, respectively. These axle positioning sensing signals may be obtained from weight signals from load sensors and/or weight indicators mounted at the weighing bridge. Furthermore, the first signal and the second signal are independent of each other, meaning that first signal only indicates when axles of the vehicle are entering the weighing bridge and the second signal only indicates when axles of the vehicle are leaving the weighing bridge. To achieve this the first signal may be obtained from weight signals from load sensors at a first side of a weighing bridge, where the first side is a side from which the vehicle enters the weighing bridge; and the second signal may be obtained from weight signals from load sensors at a second side of a weighing bridge, where the second side is a side from which the vehicle leaves the weighing bridge.

That the first threshold signal and the second threshold signal are based on and associated with the first signal and the second signal, respectively, could herein be understood to mean that the first threshold signal and the second threshold signal are computed and/or derived from the first signal and the second signal, respectively. Suitable processing using the first signal and the second signal, respectively, can be performed. The processing may involve computations using the mentioned signals as input. The processing may also involve the use of further signals and parameters so as to determine the first threshold signal and the second threshold signal, respectively.

The first transitional time period and the second transitional time period could herein be understood to be time periods during which wheels of the vehicle are in the process of entering and leaving the weighing bridge, respectively. Hence, during the transitional time periods wheels of the vehicle is partially on the weighing bridge and partially on a road surface.

The processing device according to the first aspect provides a number of advantages over conventional solutions. One such advantage is that transitional time periods when axles of a vehicle are entering and leaving a weighing bridge can be determined with improved reliability and for any combination of wheelbase and weighing bridge length. With reliable information about the transitional time periods the accuracy of the calculation of axle weights and total weight of the vehicle can be improved, as said calculations can then be based on weight samples where the axle weights are completely resting on the weighing bridge and not partially on the road surface.

In an embodiment of a processing device according to the first aspect, the processing device is further configured to at least one of:

   determine the first transitional time period based on at least one intersection between the first threshold signal and the first signal; and
   determine the second transitional time period based on at least one intersection between the second threshold signal and the second signal.

This embodiment provides an easy (low complex) and fast way to determine the first transitional time period and/or the second transitional time period, as it is easy and fast to detect an intersection between two signals.

In an embodiment of a processing device according to the first aspect, the processing device is further configured to at least one of:

   filter the first signal using a low pass filter so as to determine the first threshold signal; and
   filter the second signal using a low pass filter so as to determine the second threshold signal.

This embodiment has the advantage that the first and/or the second threshold signal will contain the same low frequency components as the first and/or the second signal, respectively. This enables the first and/or the second threshold signal to follow all slowly varying changes of the first and/or the second signal which are not associated with axels of the vehicle entering or leaving the weighing bridge. When long lasting fast changes appear a difference between the first and/or the second signal and the first and/or the second threshold signal will appear and enable the first and/or the second transitional time period to be determined.

In an embodiment of a processing device according to the first aspect, the low pass filter is a first order low pass filter having a filter coefficient in the interval between 0.2 to 1.0, and preferably in the interval between 0.75 to 0.98.

This embodiment has the advantage that a first order low pass filter is easy and fast to use, especially when calculations are made on a large amount of samples.

In an embodiment of a processing device according to the first aspect, the processing device is further configured to at least one of:

determine the first threshold signal based on the first signal and a first offset value; and
determine the second threshold signal based on the second signal and a second offset value.

This embodiment has the advantage that intersections between the first signal and the first threshold signal, as well as between the second signal and the second threshold signal, can be avoided when disturbances, such as signal oscillations appear. Intersections will only happen when the change in the first and/or the second signal is steep and lasting for a sufficiently long time.

In an embodiment of a processing device according to the first aspect, at least one of the first offset value and the second offset value are constants.

This embodiment has the advantage that the computation effort of the threshold value is minimized.

In an embodiment of a processing device according to the first aspect, at least one of the first offset value and the second offset value are functions of at least one of: a weight of the vehicle, a speed by which the vehicle enters the weighing bridge, a speed by which the vehicle leaves the weighing bridge, a direction by which the vehicle enters the weighing bridge, and a direction by which the vehicle leaves the weighing bridge.

This embodiment has the advantage that the offset value can be adjusted to different conditions for improved accuracy. For example, a smaller offset can be used at low weights as the disturbances, such as the oscillation amplitude, are often proportional to the weight. Hence, a small offset can be used at low weights without the risk of detecting a disturbance as an intersection between the first signal and the first threshold signal, and/or between the second signal and the second threshold signal.

In an embodiment of a processing device according to the first aspect, the processing device is further configured to at least one of:

determine the first threshold signal based on the filtered first signal added or subtracted with the first offset value; and
determine the second threshold signal based on the filtered second signal added or subtracted with the second offset value.

This embodiment has the advantage that intersections between the first signal and the first threshold signal, as well as between the second signal and the second threshold signal, can be avoided when disturbances, such as signal oscillations, appear. Intersections will only happen when the change in the first and/or the second signal is steep and lasting for a sufficiently long time.

In an embodiment of a processing device according to the first aspect, the first signal indicates when wheels of a vehicle enter a first side independently of when the second signal indicates when wheels of the vehicle leave a second side, and vice versa.

This embodiment has the advantage that the independency of the first and second signals prevent the risk of getting false indications in the first signal when the second signal indicates, and vice versa. For example, an entering of an axel does not influence the second signal giving the false impression that an axle is also leaving at the same time.

According to the invention, the processing device is further configured to

obtain samples of a weight signal associated with the first signal and the second signal;
discard samples of the weight signal based on the first transitional time period;
discard samples of the weight signal based on the second transitional time period.

This has the advantage that only the samples of the weight signal associated with the case when the wheels are completely resting on the weighing bridge are recorded and used for the computation of the axle weights and/or the total weight of the vehicle. Thereby, the accuracy of the weighing result is improved.

According to the invention, the processing device is further configured to

discard samples of the weight signal inside of the first transitional time period;
discard samples of the weight signal inside of the second transitional time period.

This has the advantage that samples of the weight signal in the case when the wheels are resting partially on the weighing bridge and partially on the road surface are excluded from the computation of the axle weights and the total weight of the vehicle. Thereby, the accuracy of the weighing result is improved.

According to the invention, the processing device is further configured to

discard samples of the weight signal inside of the first transitional time period extended with a first amount;
discard samples of the weight signal inside of the second transitional time period extended with a second amount.

This provides safety margins around the first and/or the second transitional time period, so as to ensure that all samples which are associated with when wheels are entering and/or leaving the weighing bridge are excluded from the computation of the axle weights and the total weight of the vehicle. The determining of the exact time points when the first and/or the second transitional time period starts and ends can be difficult in some circumstances, e.g. due to oscillations in the vehicle load, and hence a safety margin is needed.

In an embodiment of a processing device according to the first aspect,

the first amount is proportional to the first transitional time period;
the second amount is proportional to the second transitional time period.

This embodiment has the advantage that the safety margins for the first and/or the second transitional time period is automatically adjusted when parameters, such as vehicle speed, axle load and tire pressure, are changing.

In an embodiment of a processing device according to the first aspect, the processing device is further configured to

compute at least one of an axle weight for the vehicle and a total weight for the vehicle based on the non-discarded samples of the weight signal.

This embodiment has the advantage that only samples from the weight signal in the case when the wheels are resting completely on the weighing bridge and not partially on the road surface are used for the computation of the axle weights and total weight of the vehicle. Thereby, the accuracy of the weighing result is improved.

According to a second aspect of the invention, the above mentioned and other objectives are achieved with a method for a processing device, the method comprises at least one of:

obtaining a first signal indicating when wheels of a vehicle enter a first side of a weighing bridge, wherein the first side is an entering side for the vehicle,
determining a first threshold signal based on the first signal,
determining at least one first transitional time period when wheels of the vehicle enter the first side based on the first signal and the first threshold signal; and
obtaining a second signal indicating when wheels of the vehicle leave a second side of the weighing bridge, wherein the second side is a leaving side for the vehicle,
determining a second threshold signal based on the second signal,
determining at least one second transitional time period when wheels of the vehicle leave the second side based on the second signal and the second threshold signal.

In an embodiment of a method according to the second aspect, the method further comprises at least one of:

determining the first transitional time period based on at least one intersection between the first threshold signal and the first signal; and
determining the second transitional time period based on at least one intersection between the second threshold signal and the second signal.

In an embodiment of a method according to the second aspect, the method further comprises at least one of:

filtering the first signal using a low pass filter so as to determine the first threshold signal; and
filtering the second signal using a low pass filter so as to determine the second threshold signal.

In an embodiment of a method according to the second aspect, the low pass filter is a first order low pass filter having a filter coefficient in the interval between 0.2 to 1.0, and preferably in the interval between 0.75 to 0.98.

In an embodiment of a method according to the second aspect, the method further comprises at least one of:

determining the first threshold signal based on the first signal and a first offset value; and
determining the second threshold signal based on the second signal and a second offset value.

In an embodiment of a method according to the second aspect, at least one of the first offset value and the second offset value are constants.

In an embodiment of a method according to the second aspect, at least one of the first offset value and the second offset value are functions of at least one of: a weight of the vehicle, a speed by which the vehicle enters the weighing bridge, a speed by which the vehicle leaves the weighing bridge, a direction by which the vehicle enters the weighing bridge, and a direction by which the vehicle leaves the weighing bridge.

In an embodiment of a method according to the second aspect, the method further comprises at least one of:

determining the first threshold signal based on the filtered first signal added with the first offset value; and
determining the second threshold signal based on the filtered second signal added with second offset value.

In an embodiment of a method according to the second aspect, the first signal indicates when wheels of a vehicle enter a first side independently of when the second signal indicates when wheels of the vehicle leave a second side, and vice versa.

According to the invention, the method further comprises:

obtaining samples of a weight signal associated with the first signal and the second signal;
discarding samples of the weight signal based on the first transitional time period;
discarding samples of the weight signal based on the second transitional time period.

According to the invention, the method further comprises:

discarding samples of the weight signal inside of the first transitional time period;
discarding samples of the weight signal inside of the second transitional time period.

According to the invention, the method further comprises:

discarding samples of the weight signal inside of the first transitional time period extended with a first amount;
discarding samples of the weight signal inside of the second transitional time period extended with a second amount.

In an embodiment of a method according to the second aspect, the first amount is proportional to the first transitional time period; the second amount is proportional to the second transitional time period.

According to the invention, the method further comprises:
computing at least one of an axle weight for the vehicle and a total weight for the vehicle based on the non-discarded samples of the weight signal.

The advantages of the method according to the second aspect are the same as those for the corresponding processing device claims according to the first aspect.

The invention also relates to a computer program, characterized in code means, which when run by processing means causes said processing means to execute any method according to the present invention. Further, the invention also relates to a computer program product comprising a computer readable medium and said mentioned computer program, wherein said computer program is included in the computer readable medium, and comprises of one or more from the group: ROM (Read-Only Memory), PROM (Programmable ROM), EPROM (Erasable PROM), Flash memory, EEPROM (Electrically EPROM) and hard disk drive.

Further applications and advantages of the present invention will be apparent from the following detailed description.

**Brief Description of the Drawings**

The appended drawings are intended to clarify and explain different embodiments of the present invention, in which:

- Fig. 1 shows a weighing system accordance to an embodiment of the invention.
- Fig. 2 shows a processing device according to an embodiment of the invention.
- Fig. 3 shows methods accordance to an embodiment of the invention.
- Fig. 4 shows a graph illustrating the invention.
- Fig. 5 shows a graph illustrating the invention.
- Fig. 6 shows a graph illustrating the invention.

**Detailed description**

According to embodiments of the invention transitional time periods when wheels of a vehicle are entering and/or leaving a weighing bridge is determined. These transitional time periods provide a key to determine the time period when the axle weights of the vehicle are completely resting on the weighing bridge and not partially on the road surface. Thus, with knowledge of the transitional time periods the computation/calculation of axle weights and total weight of a vehicle can be based on the time period when the axle weights of the vehicle are completely resting on the weighing bridge. The accuracy of the calculation of axle weights and total weight of a vehicle is thereby improved.

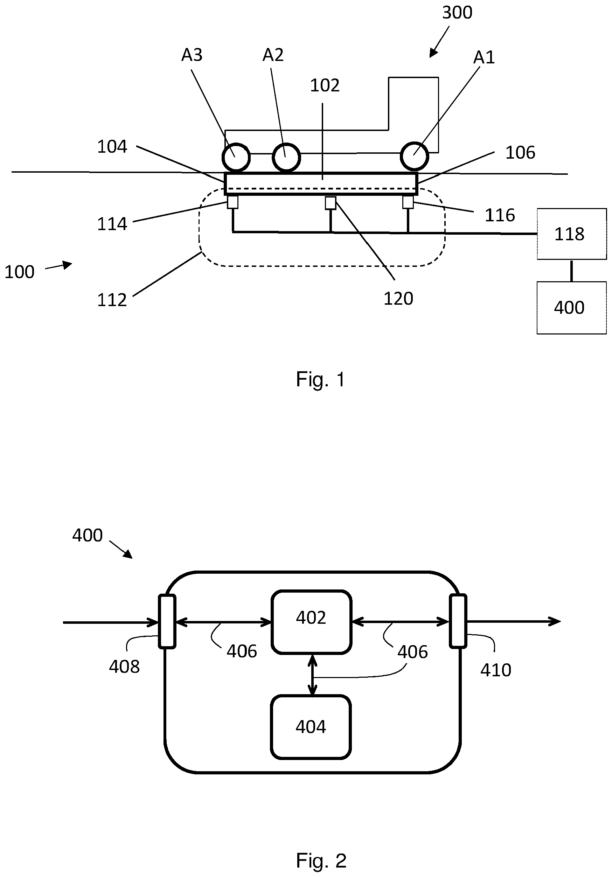

Fig. 1 shows a weighing scale 100 for weighing vehicles according to embodiments of the invention. The weighing scale 100 comprises a weighing bridge 102 having a first side 104 and a second side 106. The first side 104 may be an entering side for a vehicle 300 entering the weighing bridge 102, while the second side 106 may be a leaving side for the vehicle 300 leaving the weighing bridge 102. In the embodiment shown in Fig. 1, the exemplary vehicle 300 has three axles A1, A2, A3 and each axle A1, A2, A3 comprises two or more wheels. Furthermore, the weighing scale 100 comprises a weighing circuit 112 comprising a first set of load sensors 114a, 114b,..., 114n and a second set of load sensors 116a, 116b,..., 116n coupled to a weight indicator 118. The first set of load sensors 114a, 114b,..., 114n is arranged at the first side 104 of the weighing bridge 102 and the second set of load sensors 116a, 116b,..., 116n is arranged at the second side 106 of the weighing bridge 102. The weighing circuit 112 may also comprise additional sets of load sensors arranged under the weighing bridge 102. In the embodiment shown in Fig. 1, the weighing circuit 112 comprises one additional set of load sensors 120a, 120b,..., 120n arranged at the middle of the weighing bridge 102. However, any number of additional sets of load sensors 120a, 120b,..., 120n may be used and arranged under the weighing bridge 102 without deviating from the scope of the invention.

In an example, the vehicle 300 passes over the weighing bridge 102 from the first side 104 to the second side 106, causing weight signals to be generated by the first set of load sensors 114a, 114b,..., 114n and the second set of load sensors 116a, 116b,..., 116n. These weight signals are transferred to the weight indicator 118 coupled to the weighing circuit 112 and to a processing device 400. In the embodiment shown in Fig. 1 the processing device 400 is a standalone device. However, the processing device 400 may in some embodiments be part of the weight indicator 118 or another device of the weighing scale 100.

Fig. 2 shows an embodiment of the processing device 400. In this embodiment, the processing device 400 comprises a processor 402 coupled to a memory 404 with coupling/communication means 406 known in the art. The processing device 400 further comprises input means 408 and output means 410, which are both coupled to the processor 402 with coupling/communication means 406 known in the art. In an embodiment, the processor 402 may be a dedicated processor configured to execute the methods according to the invention only. In some embodiments, the processor 402 of the processing device 400 may instead be shared with another device of the weighing scale 100, such as the weight indicator 118, and perform additional processing.

According to embodiments of the invention the processing device 400 is configured to determine transitional time periods when wheels of a vehicle 300 are entering and/or leaving a weighing bridge 102. The processing device 400 is therefore configured to obtain a first signal *Pks* indicating when wheels of the vehicle 300 enter a first side 104 of the weighing bridge 102. The first side 104 is an entering side for the vehicle 300, as shown in Fig. 1. The processing device 400 is further configured to determine a first threshold signal *Th1* based on and associated with the first signal *Pks*. Furthermore, the processing device 400 is configured to determine at least one first transitional time period *T*1 when wheels of the vehicle 300 enter the first side 104 based on the first signal *Pks* and the first threshold signal *Th*1.

Alternatively, or in addition, the processing device 400 is configured to obtain a second signal *Aks* indicating when wheels of the vehicle 300 leave a second side 106 of the weighing bridge 102. The second side 106 is a leaving side for the vehicle 300, as shown in Fig. 1. The processing device 400 is further configured to determine a second threshold signal *Th2* based on and associated with the second signal *Aks*. The processing device 400 is further configured to determine at least one second transitional time period *T*2 when wheels of the vehicle 300 leave the second side 106 based on the second signal *Aks* and the second threshold signal *Th2*.

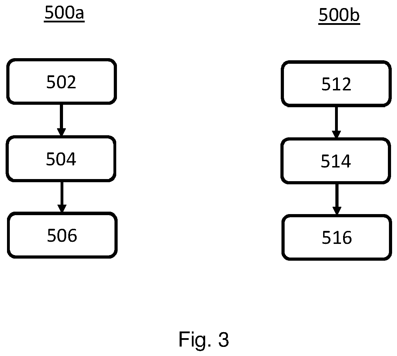

Fig. 3 shows flow charts of corresponding methods 500a and 500b which may be executed in a processing device 400, such as the one shown in Fig. 2. The processing device 400 may execute the methods 500a and 500b at the same time (parallel), one after the other (sequentially), or partially overlapping in time.

The method 500a may be executed to determine at least one first transitional time period *T*1 when wheels of a vehicle 300 enter a weighing bridge 102 and comprises the steps of obtaining 502 a first signal *Pks* indicating when wheels of the vehicle 300 enter a first side 104 of a weighing bridge 102. The first side 104 is an entering side for the vehicle 300. The method 500a further comprises determining 504 a first threshold signal *Th1* based on and associated with the first signal *Pks*. Furthermore, the method 500a comprises determining 506 at least one first transitional time period *T*1 when wheels of the vehicle 300 enter the first side 104 based on the first signal *Pks* and the first threshold signal *Th*1.

The method 500b may be executed to determine at least one second transitional time period *T*2 when wheels of a vehicle 300 leave a weighing bridge 102 and comprises the steps of obtaining 512 a second signal *Aks* indicating when wheels of the vehicle 300 leave a second side 106 of the weighing bridge 102. The second side 106 is a leaving side for the vehicle 300. The method 500b further comprises determining 514 a second threshold signal *Th2* based on and associated with the second signal *Aks*. Furthermore, the method 500b comprises determining 516 at least one second transitional time period *T*2 when wheels of the vehicle 300 leave the second side 106 based on the second signal *Aks* and the second threshold signal *Th2*.

In embodiments of the invention offset values may be used when determining the first threshold signal $Th1$ and/or the second threshold signal $Th2$. By using offset values small changes in the the first signal $Pks$ and/or the second signal $Aks$, e.g. due to oscillations in the weight of the vehicle, will not lead to false detection of a first transitional time period $T1$ and/or a second transitional time period $T2$, respectively. The processing device 400 may therefore be configured to at least one of determine the first threshold signal $Th1$ based on the first signal $Pks$ and a first offset value B1; and determine the second threshold signal $Th2$ based on the second signal $Aks$ and a second offset value B2.

The first offset value B1 and the second offset value B2 may in some embodiments be constants. However, at least one of the first offset value B1 and the second offset value B2 may in other embodiments be functions of at least one of: a weight of the vehicle 300, a weight of an axle A1, A2, A3 of the vehicle 300, a change in a weight signal, a speed by which the vehicle 300 enters the weighing bridge 102, a speed by which the vehicle 300 leaves the weighing bridge 102, a direction by which the vehicle 300 enters the weighing bridge 102, and a direction by which the vehicle 300 leaves the weighing bridge 102. Thus, the first offset value B1 and/or the second offset value B2 may be adjusted to different conditions. For example, a smaller first offset value B1 and/or second offset value B2 may be used at low weights as the disturbances, such as the oscillation amplitude, are often proportional to the weight. Hence, a small first offset value B1 and/or the second offset value B2 may be used at low weights without the risk of detecting a disturbance as an intersection between the first signal and the first threshold signal, and/or between the second signal and the second threshold signal.

In embodiments of the invention the processing device 400 may be configured to obtain the first signal $Pks$ from weight signals generated by the first set of load sensors 114a, 114b,..., 114n arranged at the first side 104 of the weighing bridge 102. Further, the processing device 400 may be configured to obtain the second signal $Aks$ from weight signals generated by the second set of load sensors 116a, 116b,..., 116n arranged at the second side 106 of the weighing bridge 102. Hence, the first signal $Pks$ indicates when wheels of a vehicle 300 enter a first side 104 independently of when the second signal $Aks$ indicates when wheels of the vehicle 300 leave a second side 106, and vice versa. In the embodiment shown in Fig. 1, the processing device 400 obtains the weight signals from the first set of load sensors 114a, 114b,..., 114n and the second set of load sensors 116a, 116b,..., 116n from the weighing indicator 118. However, if digital load sensors are used most of the functions of the weighing indicator 118 may be integrated in the the first set of load sensors 114a, 114b,..., 114n and the second set of load sensors 116a, 116b,..., 116n. In such an embodiment, the processing device 400 may therefore obtain the weight signals directly from the weighing circuit 112. Hence, no weighing indicator 118 is needed in this case.

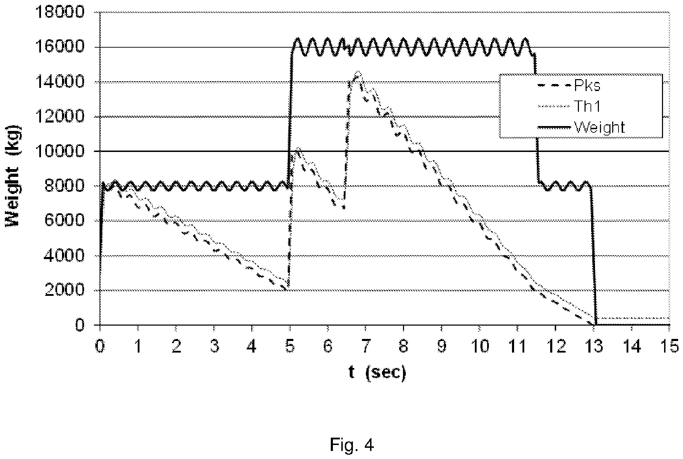

According to an embodiment of the invention the weighing scale 100 performs dynamic weighing, i.e. the weighing is performed as the vehicle 300 drives over the weighing bridge 102 of the weighing scale 100 without stopping. During the dynamic weighing, the weighing scale 100 obtains a weight signal $W$ indicating the weight over time applied by the vehicle 300 on the weighing bridge 102. The weight signal $W$ may be generated by the weight indicator 118 from the weight signals it receives from the first set of load sensors 114a, 114b,..., 114n, the second set of load sensors 116a, 116b,..., 116n, and any additional set of load sensors 120a, 120b,..., 120n. Fig. 4 shows a graph of the weight signal $W$ and the first signal $Pks$ generated during a dynamic weighing of a vehicle 300 according to an embodiment. In this embodiment, the vehicle 300 has three axles A1, A2, A3 and each axle has a weight of 8000 kg. The length of the weighing bridge 102 is 6.5 m and the speed of vehicle 300 is 1 m/s. In addition, the distance between the first axle A1 and the third axle A3 is selected to be equal to the length of the weighing bridge 102. This example will demonstrate the difficulties in using the weight signal $W$ itself to determine when wheels of the vehicle 300 enter the first side 104 of the weighing bridge 102.

Fig. 4 shows that the first signal $Pks$ has a very clear change in its slope/derivative each time an axle A1, A2, A3 of the vehicle 300 enters the first side 104 of the weighing bridge 102, at 0 sec, 5 sec and 6.5 sec. Hence, by detecting sudden continuous changes in the slope of the first signal $Pks$ the first transitional time period $T1$ when the axles A1, A2, A3, i.e. the wheels, of the vehicle 300 are entering the first side 104 of the weighing bridge 102 can be determined. That the change in the slope of the first signal $Pks$ is continuous allows temporary changes in the first signal $Pks$ caused by e.g. oscillations and disturbances in the signal to be disregarded. The weight signal $W$, on the other hand, only indicate when the first axle A1 and the second axel A2 of the vehicle 300 enter the first side 104 of the weighing bridge 102, at 0 sec and 5 sec. As the third axel A3 of the vehicle 300 enters the first side 104 of the weighing bridge 102 at the same time as the first axel A1 of the vehicle 300 leaves the second side 106 of the weighing bridge 102, i.e. at 6.5 sec, the weight signal $W$ will not change at this time. Hence, the weight signal $W$ cannot be used to determine the first transitional time period $T1$ when the third axle A3 of the vehicle 300 is entering the first side 104 of the weighing bridge 102.

By looking at the first signal $Pks$ (possibly by also considering the weight signal $W$) in Fig. 4 it can be concluded that the first axle A1 starts to enter the first side 104 of the weighing bridge 102 when the first signal $Pks$ (possibly by also considering the weight signal $W$) is approximately 0 kg and the time t is approximately 0 sec. Then the second axle A2 starts to enter when the first signal $Pks$ is approximately 2000 kg and the time t is approximately 5 sec, and the third axle A3 starts to enter when the first signal $Pks$ is approximately 6500 kg and the time t is approximately 6.5 sec. This means that the sudden continuous change in slope of the first signal $Pks$ starts at three different weight levels 0 kg, 2000 kg, and 6500 kg. Hence, there is no constant threshold value available which could be used to determine the first transitional time period $T1$ for each of the axles A1, A2, A3 of the vehicle 300. Instead the threshold should follow the variations of the first signal $Pks$ and be a variable threshold signal. The advantage with a variable threshold signal is that there is no need to calculate the derivative of the first signal $Pks$. The derivative of the first signal $Pks$ would magnify the amplitude of all oscillations and disturbances and thus make it more difficult to distinguish between disturbances and real occasions of axles A1, A2, A3 of the vehicle 300 entering the first side 104 of the weighing bridge 102.

According to embodiments of the invention the variable threshold signal is obtained by filtering of the first signal $Pks$, using either analogue or digital low pass filtering. In one such embodiment, the processing device 400 is configured to filter the first signal $Pks$ using a low pass filter so as to determine a first threshold signal $Th1$. The low pass filter may be a first order low pass filter having a filter coefficient A, e.g. in the interval between 0.2 to 1.0, and preferably in the interval between 0.75 to 0.98. However, low pass filtering of higher orders can also be used. An advantage of higher order filtering is that the attenuation of oscillations will become more effective, on the other hand this acquires more computation capacity in the processor 402.

In addition, an offset value may be used when determining the first threshold signal $Th1$ in some embodiments. In one such embodiment, the processing device 400 may be configured to determine the first threshold signal $Th1$ based on the filtered first signal $Pks$ added with a first offset value B1. The first offset value B1 may be constant or variable, e.g. a function of weight, speed, and/or direction of the vehicle 300, as described above.

Fig. 4 shows a first threshold signal $Th1$ determined by filtering of a first signal $Pks$ according to an embodiment. The first threshold signal $Th1$ shown in Fig. 4 has been obtained based on the following equation:

$$Th1_k = (1\text{-}A)^* Th1_{k-1} + A^* Pks_k \qquad\qquad\qquad \text{Equation (1)}$$

where $Pks_k$ and $Th1_k$ are the signal values at the sampling time point $t_k$, $t_k$ are the sampling time points for $k=0,1,2,3,....$, $Th1_{k-1}$ are the value at the time point $t_{k-1}$, and A has a value between 0 and 1 (in Fig. 4 A=0.2 ).

The sampling times $t_k$ can for instance be made with a frequency of 100 Hz which corresponds to 0.01 sec between each sample ($t_k$ - $t_{k-1}$ = 0.01 sec).

The first threshold signal $Th1$ obtained with Equation (1) has an advantage of reducing oscillations but at the same time closely follow the movement of the original first signal $Pks$. As shown in Fig. 4, the first threshold signal $Th1$ has most of the time a slight positive offset in relation to the first signal $Pks$. However, at the start of a sudden continuous change in the slope of the first signal $Pks$, the first threshold signal $Th1$ intersects/crosses the first signal $Pks$ and has a slight negative offset to the first signal $Pks$ during a short time period. At the end of the sudden continuous change in the slope of the first signal $Pks$, the first threshold signal $Th1$ again intersects the first signal $Pks$ and returns to having a slight positive offset in relation to the first signal $Pks$. Thus, an intersection between the first threshold signal $Th1$ and the first signal $Pks$ indicates either a start or an end of a sudden continuous change in slope of the first signal $Pks$. These intersections may therefore be used to determine the first transitional time periods $T1_{A1}$, $T1_{A2}$, $T1_{A3}$ when the axles A1, A2, A3 of the vehicle 300 enter the first side 104 of the weighing bridge 102. According to an embodiment the processing device 400 may be configured to determine the first transitional time period T1 based on at least one intersection between the first threshold signal $Th1$ and the first signal $Pks$.

Alternatively, or in addition, the time periods during which the first threshold signal $Th1$ has a negative offset in relation to the first signal $Pks$ may be used to determine the first transitional time periods $T1_{A1}$, $T1_{A2}$, $T1_{A3}$. According to an embodiment the processing device 400 may hence be configured to determine the first transitional time period $T1$ based on at least one time period during which the first threshold signal $Th1$ has a negative offset in relation to the first signal $Pks$. A time period when the first threshold signal $Th1$ has a negative offset in relation to the first signal $Pks$ may e.g. be detected using the following condition:

$$Pks_k > Th1_k + B1 \qquad\qquad \text{for } k=0,1,2,3,.... \qquad\qquad\qquad \text{Equation (2)}$$

where B1 is an offset which could be a constant or variable, e.g. a function of weight, speed, and/or direction of the vehicle 300. The offset B1 may be set to e.g. 50 to 200kg. Hence, if the condition defined by Equation (2) is fulfilled starting with samples $k$ and ending with samples $k+n$ the time period from $t_k$ to $t_{k+n}$ will correspond to a first transitional time period $T1$.

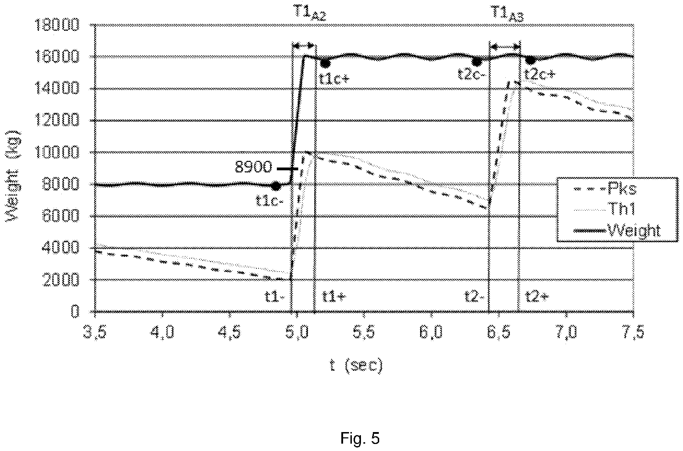

Fig. 5 shows a zoomed graph of Fig. 4 to illustrate how the first signal $Pks$ and the first threshold signal $Th1$ are used to determine the first transitional time periods $T1_{A2}$, $T1_{A3}$. The first threshold signal $Th1$ intersects the first signal $Pks$ at the time points t1-, t1+, t2- and t2+, shown in Fig. 5. Between the time points t1- and t1+, as well as between the time points t2- and t2+, the first threshold signal $Th1$ has a negative offset in relation to the first signal $Pks$. This means that approximately between the time points t1- and t1+ and between the time points t2- and t2+ the weight of the axels A2, A3 of the vehicle 300 are shifting from the road surface in front of the weighing bridge 102 to the weighing bridge 102 itself. Hence, the time period between the time points t1- and t1+ will represent the first transitional time period $T1_{A2}$ when the second axle A2 of the vehicle 300 is entering the first side 104 of the weighing bridge 102. In the same way, the time period between the time points t2- and t2+ will represent the first transitional time period $T1_{A3}$ when the third axle A3 of the vehicle 300 is entering the first side 104 of the weighing bridge 102. Therefore, in an embodiment each first or second transitional time period is determined based on two or more intersections.

Fig. 5 further shows that at the start of the determined first transitional time period $T1_{A2}$, i.e. at the time point t1-, the weight signal W is already somewhat higher than 8000 kg, approximately 8900 kg. This means that at the time point t1- the second axle A2 has already partly entered the weighing bridge 102. Hence, some weight samples from when the second axle A2 is entering the weighing bridge 102 fall outside the determined first transitional time period $T1_{A2}$ in the embodiment shown in Fig. 5. In order to ensure that all weight samples from when the second axle A2 is entering the weighing bridge 102 are inside the determined first transitional time period $T1_{A2}$, the first transitional time period $T1_{A2}$ may be extended. The first transitional time period $T1_{A2}$ may e.g. be extended with an amount proportional to the first transitional time period $T1_{A2}$. In the embodiment shown in Fig. 5, new time points t1c- and t1c+ are determined based on the first transitional time period $T1_{A2}$ in the following way, here the proportionality factor of 0.5 has been chosen:

$$(t1c\text{-}) = (t1\text{-}) - 0.5*[(t1+) - (t1\text{-})] = (t1\text{-}) - 0.5*T1_{A2} \qquad \text{Equation (3)}$$

$$(t1c+) = (t1+) + 0.5*[(t1+) - (t1\text{-})] = (t1+) + 0.5*T1_{A2} \qquad \text{Equation (4)}$$

The time points t1c- and t1c+ may then be used to determine an extended first transitional time period $T1_{A2}$ (not shown in Fig. 5) which does not include any weight samples from when the second axle A2 is entering the weighing bridge 102.

In a similar way, the first transitional time period $T1_{A3}$ may be used to determine the time points t2c- and t2c+, shown in Fig. 5. The time points t2c- and t2c+ may then be used to determine an extended first transitional time period $T1_{A3}$ (not shown in Fig. 5) which does not include any weight samples from when the third axle A3 is entering the weighing bridge 102.

According to embodiments of the invention the second transitional time period T2 when wheels of the vehicle 300 leave a second side 106 of the weighing bridge 102 are determined in the same way as the first transitional time period T1 is determined, but based on the second signal *Aks* and a second threshold signal *Th2*. Thus, in one embodiment the processing device 400 is configured to filter the second signal *Aks* using a low pass filter so as to determine the second threshold signal *Th2*. The low pass filter may be a first order low pass filter having a filter coefficient A in the interval between 0.2 to 1.0, and preferably in the interval between 0.75 to 0.98. However, low pass filtering of higher orders can also be used as previously described.

In addition, an offset value may be used when determining the second threshold signal *Th2* in some embodiments. In one such embodiment, the processing device 400 may be configured to determine the second threshold signal *Th2* based on the filtered second signal *Aks* subtracted with a second offset value B2. The second offset value B2 may be constant or variable, e.g. a function of weight, speed, and direction of the vehicle 300, as described above.

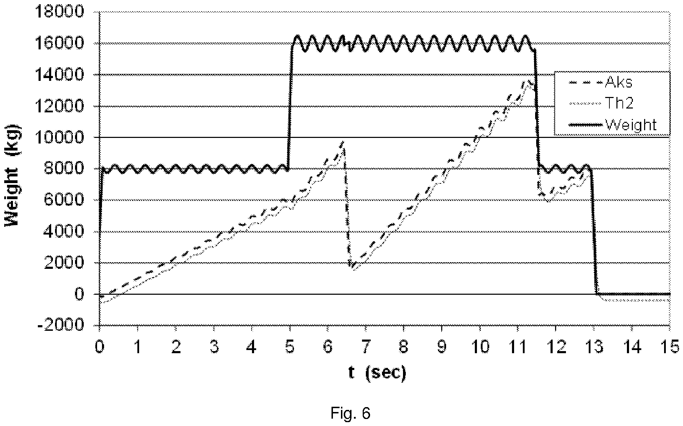

Fig. 6 shows a graph of the weight signal *W,* the second signal *Aks,* and the second threshold signal *Th2* according to an embodiment. The second threshold signal *Th2* has been obtained by filtering of the second signal *Aks* using the above described Equation (1):

$$Th2_k = (1\text{-A})*Th2_{k-1} + A*Aks_k \qquad \text{Equation (1)}$$

where $Aks_k$ and $Th2_k$ are the signal values at the sampling time point $t_k$, $t_k$ are the sampling time points for $k = 0, 1, 2, 3,...$, $Th2_{k-1}$ are the value at the time point $t_{k-1}$, and A has a value between 0 and 1 (in Fig. 6 A=0.2 ).

As shown in Fig. 6 the second threshold signal *Th2* has a slight negative offset to the second signal *Aks* most of the time. However, at the start of a sudden continuous change in slope of the second signal *Aks,* the second threshold signal *Th2* intersects/crosses the second signal *Aks* and has a slight positive offset to the second signal *Aks* during a short time period. At the end of the sudden continuous change in slope of the second signal *Aks,* the second threshold signal *Th2* again intersects the second signal *Aks* and returns to having a slight negative offset to the second signal *Aks.* Thus, an intersection between the second threshold signal *Th2* and the second signal *Aks* indicates either a start or an end of a sudden continuous changes in slope of the first signal *Pks.* These intersections may therefore be used to determine the second transitional time periods $T2_{A1}$, $T2_{A2}$, $T2_{A3}$ when the axles A1, A2, A3 of the vehicle 300 leave the second side 106 of the weighing bridge 102. According to an embodiment the processing device 400 may be configured to determine the second transitional time period *T2* based on at least one intersection between the second threshold signal *Th2* and the second signal *Aks.*

Alternatively, or in addition, the time periods from which the second threshold signal *Th2* starts to have a positive offset until it ends to have a positive offset in relation to the second signal *Aks* may be used to determine the second transitional time periods $T2_{A1}$, $T2_{A2}$, $T2_{A3}$. According to an embodiment the processing device 400 may be configured to determine the second transitional time period *T2* based on at least one time period during which the second threshold signal *Th2* has a negative offset to the second signal *Aks*. A time period when the second threshold signal *Th2* has a negative offset to the second signal *Aks* may e.g. be detected using the following condition:

$$Aks_k < Th2_k - B2 \qquad \text{for k = 0, 1, 2, 3,...} \qquad \text{Equation (5)}$$

where B2 is an offset which could be a constant or variable, e.g. a function of weight, speed, and/or direction of the vehicle 300. The offset B2 can be set to e.g. 50 to 200 kg. Hence, if the condition defined by Equation (3) is fulfilled starting with samples *k* and ending with samples *k+n* the time period from $t_k$ to $t_{k+n}$ will correspond to a second transitional time period *T2*.

Once at least one first transitional time period *T1* and/or at least one second transitional time period *T2* has been determined, samples of a weight signal *W* obtained during these transitional time periods *T1*, *T2* can be identified. Samples of the weight signal *W* obtained during the transitional time periods *T1*, *T2* corresponds to the weight of the vehicle 300 when one or more axels A1, A2, A3 are entering or leaving the weighing bridge 102, i.e. when the weights of one or more axels A1, A2, A3 of the vehicle 300 are only partially resting on the weighing bridge 102. Thus, samples of the weight signal *W* obtained during the transitional time periods *T1*, *T2* should be discarded as they do not accurately represent the axel weight or the total weight of the vehicle 300.

According to embodiments of the invention the processing device 400 is configured to obtain samples of a weight signal *W* associated with the first signal *Pks* and the second signal *Aks*. The processing device 400 is further configured to discard samples of the weight signal *W* based on the first transitional time period *T1* and/or based on the second transitional time period *T2*. In one such embodiment, the processing device 400 is configured to discard samples of the weight signal *W* inside of the first transitional time period *T1* and/or inside of the second transitional time period *T2*. This ensures that samples of the weight signal *W* obtained during the entering or leaving of the axles A1, A2, A3 of the vehicle 300 are discarded and thereby not considered when the axel weight and total weight of the vehicle 300 is computed.

A safety marginal around the transitional time periods *T1*, *T2* may be used to further ensure the accuracy of the computation of the axel weight and the total weight of the vehicle 300. In this case, the processing device 400 may be configured to discard samples of the weight signal *W* inside of the first transitional time period *T1* extended with a first amount *D1* and/or inside of the second transitional time period *T2* extended with a second amount *D2*. The first amount *D1* may be proportional to the first transitional time period *T1*, while the second amount *D2* may be proportional to the second transitional time period *T2*.

The samples of the weight signal *W* remaining after the discarding of samples of the weight signal W based on the transitional time periods *T1*, *T2* may then be used to accurately compute the axel weight and the total weight of the vehicle 300. Hence, the processing device 400 may be configured to compute at least one of an axle weight for the vehicle 300 and a total weight for the vehicle 300 based on the non-discarded samples of the weight signal *W.*

Any method according to embodiments of the invention may be implemented in a computer program, having code means, which when run by processing means causes the processing means to execute the steps of the method. The computer program is included in a computer readable medium of a computer program product. The computer readable medium may comprise essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Moreover, it is realized by the skilled person that embodiments of the processing device 400 comprise the necessary communication capabilities in the form of e.g., functions, means, units, elements, etc., for performing the present solution. Examples of such functions, means, units, elements are: processors, memory, buffers, control logic, encoders, decoders, rate matchers, de-rate matchers, mapping units, multipliers, decision units, selecting units, switches, interleavers, de-interleavers, modulators, demodulators, inputs, outputs, antennas, amplifiers, receiver units, transmitter units, DSPs, MSDs, TCM encoder, TCM decoder, power supply units, power feeders, communication interfaces, communication protocols, etc. which are suitably arranged together for performing the present solution.

Especially, the processor 402 of the processing device 400 may comprise, e.g. one or more instances of a Central Processing Unit (CPU), a processing unit, a processing circuit, a processor, an Application Specific Integrated Circuit (ASIC), a microprocessor, or other processing logic that may interpret and execute instructions. The expression "processor" may thus represent a processing circuitry comprising a plurality of processing circuits, such as, e.g. any, some, or all of the ones mentioned above. The processing circuitry may further perform data processing functions for inputting, outputting, and processing of data comprising data buffering and device control functions, such as call processing control, user interface control, or the like.

## Claims

1. A processing device (400) for a weighing scale (100), wherein the processing device (400) is configured to:

   obtain a first axle positioning sensing signal (*Pks)* indicating when wheels of a vehicle (300) enter a first side (104) of a weighing bridge (102), wherein the first side (104) is an entering side for the vehicle (300), determine a first threshold signal (*Th*1) based on the first axle positioning sensing signal (*Pks*), determine at least one first transitional time period (*T*1) when wheels of the vehicle (300) enter the first side (104) based on the first axle positioning sensing signal (*Pks*) and the first threshold signal (*Th*1); and obtain a second axle positioning sensing signal (*Aks*) indicating when wheels of the vehicle (300) leave a second side (106) of the weighing bridge (102), wherein the second side (106) is a leaving side for the vehicle (300), determine a second threshold signal (*Th2*) based on the second axle positioning sensing signal (*Aks*), determine at least one second transitional time period (*T*2) when wheels of the vehicle (300) leave the second side (106) based on the second axle positioning sensing signal (*Aks*) and the second threshold signal (*Th2*); obtain samples of a weight signal (*W*) associated with the first axle positioning sensing signal (*Pks*) and the second axle positioning sensing signal (*Aks*); discard samples of the weight signal (*W*) based on the first transitional time period (T1)*;* discard samples of the weight signal (*W*) based on the second transitional time period (*T*2)*;* and compute at least one of an axle weight for the vehicle (300) and a total weight for the vehicle (300) based on the non-discarded samples of the weight signal (*W*).

2. The processing device (400) according to claim 1, configured to at least one of:

   determine the first transitional time period (*T*1) based on at least one intersection between the first threshold signal (*Th*1) and the first axle positioning sensing signal (*Pks*); and determine the second transitional time period (*T*2) based on at least one intersection between the second threshold signal (*Th*2) and the second axle positioning sensing signal (*Aks*).

3. The processing device (400) according to claim 1 or 2, configured to at least one of:

   filter the first axle positioning sensing signal (*Pks*) using a low pass filter so as to determine the first threshold signal (*Th*1); and filter the second axle positioning sensing signal (*Aks*) using a low pass filter so as to determine the second threshold signal (*Th*2).

4. The processing device (400) according to claim 3, wherein the low pass filter is a first order low pass filter having a filter coefficient (A) in the interval between 0.2 to 1.0, and preferably in the interval between 0.75 to 0.98.

5. The processing device (400) according to any of the preceding claims, configured to at least one of:

   determine the first threshold signal (*Th*1) based on the first axle positioning sensing signal (*Pks*) and a first offset value (B1); and determine the second threshold signal (*Th*2) based on the second axle positioning sensing signal (*Aks*) and a second offset value (B2).

6. The processing device (400) according to claim 5, wherein

   at least one of the first offset value (B1) and the second offset value (B2) are constants; and/or at least one of the first offset value (B1) and the second offset value (B2) are functions of at least one of: a weight of the vehicle (300), a speed by which the vehicle (300) enters the weighing bridge (102), a speed by which the vehicle (300) leaves the weighing bridge (102), a direction by which the vehicle (300) enters the weighing bridge (102), and a direction by which the vehicle (300) leaves the weighing bridge (102).

7. The processing device (400) according to claim 5 or 6 when dependent on claim 3 or 4, configured to at least one of:

   determine the first threshold signal ($Th1$) based on the filtered first signal ($Pks$) added or subtracted with the first offset value (B1); and
   determine the second threshold signal ($Th2$) based on the filtered second signal ($Aks$) added or subtracted with the second offset value (B2).

8. The processing device (400) according to any of the preceding claims, wherein the first axle positioning sensing signal ($Pks$) indicates when wheels of a vehicle (300) enter a first side (104) independently of when the second axle positioning sensing signal ($Aks$) indicates when wheels of the vehicle (300) leave a second side (106), and vice versa.

9. The processing device (400) according to any one of the preceding claims, configured to

   discard samples of the weight signal ($W$) inside of the first transitional time period ($T1$);
   discard samples of the weight signal ($W$) inside of the second transitional time period ($T2$).

10. The processing device (400) according to claim 9, configured to

    discard samples of the weight signal ($W$) inside of the first transitional time period ($T1$) extended with a first amount ($D1$);
    discard samples of the weight signal ($W$) inside of the second transitional time period (T2) extended with a second amount (D2).

11. The processing device (400) according to claim 10, wherein

    the first amount (D1) is proportional to the first transitional time period ($T1$);
    the second amount (D2) is proportional to the second transitional time period (T2).

12. A method for a processing device (400), the method (500) comprising:

    obtaining (502) a first axle positioning sensing signal *(Pks)* indicating when wheels of a vehicle (300) enter a first side (104) of a weighing bridge (102), wherein the first side (104) is an entering side for the vehicle (300),
    determining (504) a first threshold signal ($Th1$) based on the first axle positioning sensing signal *(Pks)*,
    determining (506) at least one first transitional time period ($T1$) when wheels of the vehicle (300) enter the first side (104) based on the first axle positioning sensing signal *(Pks)* and the first threshold signal ($Th1$); and
    obtaining (512) a second axle positioning sensing signal *(Aks)* indicating when wheels of the vehicle (300) leave a second side (106) of the weighing bridge (102), wherein the second side (106) is a leaving side for the vehicle (300),
    determining (514) a second threshold signal *(Th2)* based on the second axle positioning sensing signal *(Aks)*,
    determining (516) at least one second transitional time period (T2) when wheels of the vehicle (300) leave the second side (106) based on the second axle positioning sensing signal *(Aks)* and the second threshold signal *(Th2)*;
    obtaining samples of a weight signal ($W$) associated with the first axle positioning sensing signal *(Pks)* and the second axle positioning sensing signal ($Aks$);
    discarding samples of the weight signal ($W$) based on the first transitional time period ($T1$);
    discarding samples of the weight signal ($W$) based on the second transitional time period (*T2*); and
    computing at least one of an axle weight for the vehicle (300) and a total weight for the vehicle (300) based on the non-discarded samples of the weight signal ($W$).

13. A computer program with a program code for performing a method according to claim 12 when the computer program runs on a computer.


**Patentansprüche**

1. Verarbeitungsvorrichtung (400) für eine Waage (100), wobei die Verarbeitungsvorrichtung (400) konfiguriert ist zum:

   Erlangen eines ersten Achspositionierung-Erfassungssignals *(Pks),* das angibt, wenn Räder eines Fahrzeugs (300) in eine erste Seite (104) einer Wiegebrücke (102) einfahren, wobei die erste Seite (104) eine Einfahrseite für das Fahrzeug (300) ist,

Bestimmen eines ersten Schwellenwertsignals *(Th1)* basierend auf dem ersten Achspositionierung-Erfassungssignal *(Pks)*,

Bestimmen mindestens einer ersten Übergangszeitperiode (*T*1)*, wenn Räder des Fahrzeugs (300) in die erste Seite (104) einfahren, basierend auf dem ersten Achspositionierung-Erfassungssignal *(Pks)* und dem ersten Schwellenwertsignal (*Th*1); und

Erlangen eines zweiten Achspositionierung-Erfassungssignals *(Aks)*, das angibt, wenn Räder des Fahrzeugs (300) aus einer zweiten Seite (106) der Wiegebrücke (102) ausfahren, wobei die zweite Seite (106) eine Ausfahrseite für das Fahrzeug (300) ist,

Bestimmen eines zweiten Schwellenwertsignals *(Th2)* basierend auf dem zweiten Achspositionierung-Erfassungssignal *(Aks)*,

Bestimmen mindestens einer zweiten Übergangszeitperiode (*T*2)*, wenn Räder des Fahrzeugs (300) aus der zweiten Seite (106) ausfahren, basierend auf dem zweiten Achspositionierung-Erfassungssignal *(Aks)* und dem zweiten Schwellenwertsignal (*Th*2);

Erlangen von Abtastungen eines Gewichtssignals (*W*), das mit dem ersten Achspositionierung-Erfassungssignal *(Pks)* und dem zweiten Achspositionierung-Erfassungssignal *(Aks)* assoziiert ist;

Verwerfen von Abtastungen des Gewichtssignals (*W)* basierend auf der ersten Übergangszeitperiode (*T*1);

Verwerfen von Abtastungen des Gewichtssignals (*W*) basierend auf der zweiten Übergangszeitperiode (*T*2); und

Berechnen mindestens eines eines Achsgewichts für das Fahrzeug (300) und eines Gesamtgewichts für das Fahrzeug (300) basierend auf den nicht verworfenen Abtastungen des Gewichtssignals (*W*).

2.  Verarbeitungsvorrichtung (400) nach Anspruch 1, konfiguriert zu mindestens einem von Folgendem:

    Bestimmen der ersten Übergangszeitperiode (T1) basierend auf mindestens einem Schnittpunkt zwischen dem ersten Schwellenwertsignal *(Th1)* und dem ersten Achspositionierung-Erfassungssignal *(Pks)*; und

    Bestimmen der zweiten Übergangszeitperiode (T2) basierend auf mindestens einem Schnittpunkt zwischen dem zweiten Schwellenwertsignal *(Th2)* und dem zweiten Achspositionierung-Erfassungssignal *(Aks)*.

3.  Verarbeitungsvorrichtung (400) nach Anspruch 1 oder 2, konfiguriert zu mindestens einem von Folgendem:

    Filtern des ersten Achspositionierung-Erfassungssignals *(Pks)* unter Verwendung eines Tiefpassfilters, um das erste Schwellenwertsignal (*Th*1) zu bestimmen; und

    Filtern des zweiten Achspositionierung-Erfassungssignals *(Aks)* unter Verwendung eines Tiefpassfilters, um das zweite Schwellenwertsignal (*Th*2) zu bestimmen.

4.  Verarbeitungsvorrichtung (400) nach Anspruch 3, wobei das Tiefpassfilter ein Tiefpassfilter erster Ordnung mit einem Filterkoeffizienten (A) in dem Intervall zwischen 0,2 und 1,0 und vorzugsweise in dem Intervall zwischen 0,75 und 0,98 ist.

5.  Verarbeitungsvorrichtung (400) nach einem der vorhergehenden Ansprüche, konfiguriert zu mindestens einem von Folgendem:

    Bestimmen des ersten Schwellenwertsignals *(Th1)* basierend auf dem ersten Achspositionierung-Erfassungssignal (*Pks*) und einem ersten Versatzwert (B1); und

    Bestimmen des zweiten Schwellenwertsignals (*Th2*) basierend auf dem zweiten Achspositionierung-Erfassungssignal (*Aks*) und einem zweiten Versatzwert (B2).

6.  Verarbeitungsvorrichtung (400) nach Anspruch 5, wobei

    mindestens einer des ersten Versatzwerts (B1) und des zweiten Versatzwerts (B2) eine Konstante ist; und/oder mindestens einer des ersten Versatzwerts (B1) und des zweiten Versatzwerts (B2) eine Funktion mindestens eines von Folgendem ist: ein Gewicht des Fahrzeugs (300), eine Geschwindigkeit, mit der das Fahrzeug (300) in die Wiegebrücke (102) einfährt, eine Geschwindigkeit, mit der das Fahrzeug (300) aus der Wiegebrücke (102) ausfährt, eine Richtung, in der das Fahrzeug (300) in die Wiegebrücke (102) einfährt, und eine Richtung, in der das Fahrzeug (300) aus der Wiegebrücke (102) ausfährt.

7.  Verarbeitungsvorrichtung (400) nach Anspruch 5 oder 6 bei Abhängigkeit von den Ansprüchen 3 oder 4, konfiguriert zu mindestens einem von Folgendem:

> Bestimmen des ersten Schwellenwertsignals (*Th1*) basierend auf dem gefilterten ersten Signal (*Pks*), zu dem der erste Versatzwert (B1) addiert wurde oder von dem dieser subtrahiert wurde; und
> Bestimmen des zweiten Schwellenwertsignals *(Th2)* basierend auf dem gefiltertem zweiten Signal (*Aks*), zu dem der zweite Versatzwert (B2) addiert wurde oder von dem dieser subtrahiert wurde.

**8.** Verarbeitungsvorrichtung (400) nach einem der vorhergehenden Ansprüche, wobei das erste Achspositionierung-Erfassungssignal (*Pks*) angibt, wenn Räder eines Fahrzeugs (300) in eine erste Seite (104) einfahren, unabhängig davon, wenn das zweite Achspositionierung-Erfassungssignal (*Aks*) angibt, wenn Räder des Fahrzeugs (300) aus einer zweiten Seite (106) ausfahren, und umgekehrt.

**9.** Verarbeitungsvorrichtung (400) nach einem der vorhergehenden Ansprüche, konfiguriert zum

> Verwerfen von Abtastungen des Gewichtssignals (*W*) innerhalb der ersten Übergangszeitperiode (*T1*);
> Verwerfen von Abtastungen des Gewichtssignals (*W*) innerhalb der zweiten Übergangszeitperiode (*T2*).

**10.** Verarbeitungsvorrichtung (400) nach Anspruch 9, konfiguriert zum

> Verwerfen von Abtastungen des Gewichtssignals (*W*) innerhalb der ersten Übergangszeitperiode (*T*1), die um einen ersten Betrag (*D*1) verlängert wurde;
> Verwerfen von Abtastungen des Gewichtssignals (*W*) innerhalb der zweiten Übergangszeitperiode (*T*2), die um einen zweiten Betrag (*D*2) verlängert wurde.

**11.** Verarbeitungsvorrichtung (400) nach Anspruch 10, wobei

> der erste Betrag (*D*1) proportional zu der ersten Übergangszeitperiode (*T*1) ist;
> der zweite Betrag (*D*2) proportional zu der zweiten Übergangszeitperiode (*T*2) ist.

**12.** Verfahren für eine Verarbeitungsvorrichtung (400), das Verfahren (500) umfassend:

> Erlangen (502) eines ersten Achspositionierung-Erfassungssignals *(Pks),* das angibt, wenn Räder eines Fahrzeugs (300) in eine erste Seite (104) einer Wiegebrücke (102) einfahren, wobei die erste Seite (104) eine Einfahrseite für das Fahrzeug (300) ist,
> Bestimmen (504) eines ersten Schwellenwertsignals (Th1) basierend auf dem ersten Achspositionierung-Erfassungssignal (*Pks*),
> Bestimmen (506) mindestens einer ersten Übergangszeitperiode (*T*1), wenn Räder des Fahrzeugs (300) in die erste Seite (104) einfahren, basierend auf dem ersten Achspositionierung-Erfassungssignal (*Pks*) und dem ersten Schwellenwertsignal (*Th*1); und
> Erlangen (512) eines zweiten Achspositionierung-Erfassungssignals (*Aks*), das angibt, wenn Räder des Fahrzeugs (300) aus einer zweiten Seite (106) der Wiegebrücke (102) ausfahren, wobei die zweite Seite (106) eine Ausfahrseite für das Fahrzeug (300) ist,
> Bestimmen (514) eines zweiten Schwellenwertsignals (*Th*2) basierend auf dem zweiten Achspositionierung-Erfassungssignal (*Aks*),
> Bestimmen (516) mindestens einer zweiten Übergangszeitperiode (*T*2), wenn Räder des Fahrzeugs (300) aus der zweiten Seite (106) ausfahren, basierend auf dem zweiten Achspositionierung-Erfassungssignal (*Aks*) und dem zweiten Schwellenwertsignal (*Th*2);
> Erlangen von Abtastungen eines Gewichtssignals (*W*), das mit dem ersten Achspositionierung-Erfassungssignal *(Pks)* und dem zweiten Achspositionierung-Erfassungssignal (*Aks*) assoziiert ist;
> Verwerfen von Abtastungen des Gewichtssignals (*W*) basierend auf der ersten Übergangszeitperiode (*T*1);
> Verwerfen von Abtastungen des Gewichtssignals (*W*) basierend auf der zweiten Übergangszeitperiode (*T*2); und
> Berechnen mindestens eines eines Achsgewichts für das Fahrzeug (300) und eines Gesamtgewichts für das Fahrzeug (300) basierend auf den nicht verworfenen Abtastungen des Gewichtssignals (*W*).

**13.** Computerprogramm mit einem Programmcode zum Durchführen eines Verfahrens nach Anspruch 12, wenn das Computerprogramm auf einem Computer ausgeführt wird.

**Revendications**

1. Dispositif de traitement (400) pour une bascule de pesage (100), ce dispositif de traitement (400) étant configuré de façon à

   obtenir un premier signal de détection de positionnement d'essieu *(Pks)* indiquant quand les roues d'un véhicule (300) entrent dans un premier côté (104) d'un pont bascule (102), ce premier côté (104) étant un côté d'entrée pour le véhicule (300),
   déterminer un premier signal de seuil (T*h1*) en se basant sur le premier signal de détection de positionnement d'essieu *(Pks)*,
   déterminer au moins une première période de temps transitionnelle (*T1*) lorsque les roues du véhicule (300) entrent dans le premier côté (104) en se basant sur le premier signal de détection de positionnement d'essieu *(Pks)* et sur le premier signal de seuil (*Th*1) ; et de façon à
   obtenir un deuxième signal de détection de positionnement d'essieu (*Aks*) indiquant quand les roues du véhicule (300) quittent un deuxième côté (106) du pont bascule (102), ce deuxième côté (106) étant un côté de sortie pour le véhicule (300),
   déterminer un deuxième signal de seuil (*Th2*) en se basant sur le deuxième signal de détection de positionnement d'essieu (*Aks*),
   déterminer au moins une deuxième période de temps transitionnelle (*T2*) lorsque les roues du véhicule (300) quittent le deuxième côté (106) en se basant sur le deuxième signal de détection de positionnement d'essieu (*Aks*) et sur le deuxième signal de seuil (*Th2*) ;
   obtenir des échantillons d'un signal de poids (*W*) associé au premier signal de détection de positionnement d'essieu *(Pks)* et au deuxième signal de détection de positionnement d'essieu (*Aks*) ;
   rejeter des échantillons du signal de poids (*W*) en se basant sur la première période de temps transitionnelle (*T*1) ;
   rejeter des échantillons du signal de poids (*W*) en se basant sur la deuxième période de temps transitionnelle (*T2*) ; et de façon à
   calculer au moins soit un poids d'essieu pour le véhicule (300), soit un poids total pour le véhicule (300) en se basant sur les échantillons non rejetés du signal de poids (*W*).

2. Dispositif de traitement (400) selon la revendication 1, configuré de façon à exécuter au moins une des opérations suivantes :

   déterminer la première période de temps transitionnelle (*T*1) en se basant sur au moins une intersection entre le premier signal de seuil (*Th*1) et le premier signal de détection de positionnement d'essieu *(Pks)* ; et
   déterminer la deuxième période de temps transitionnelle (*T2*) en se basant sur au moins une intersection entre le deuxième signal de seuil (*Th*2) et le deuxième signal de détection de positionnement d'essieu (*Aks*).

3. Dispositif de traitement (400) selon la revendication 1 ou 2, configuré de façon à exécuter au moins une des opérations suivantes :

   filtrer le premier signal de détection de positionnement d'essieu *(Pks)* en utilisant un filtre passe-bas afin de déterminer le premier signal de seuil (*Th*1) ; et
   filtrer le deuxième signal de détection de positionnement d'essieu (*Aks*) en utilisant un filtre passe-bas afin de déterminer le deuxième signal de seuil *(Th2)* .

4. Dispositif de traitement (400) selon la revendication 3, dans lequel le filtre passe-bas est un filtre passe-bas de premier ordre ayant un coefficient de filtre (A) dans l'intervalle entre 0,2 et 1,0, et de préférence dans l'intervalle entre 0,75 et 0,98.

5. Dispositif de traitement (400) selon l'une quelconque des revendications précédentes, configuré de façon à exécuter au moins une des opérations suivantes :

   déterminer le premier signal de seuil (*Th*1) en se basant sur le premier signal de détection de positionnement d'essieu *(Pks)* et sur une première valeur de décalage (B1) ; et
   déterminer le deuxième signal de seuil (*Th*2) en se basant sur le deuxième signal de détection de positionnement d'essieu (*Aks*) et sur une deuxième valeur de décalage (B2).

6. Dispositif de traitement (400) selon la revendication 5, dans lequel :

au moins soit la première valeur de décalage (B1), soit la deuxième valeur de décalage (B2) est une constante ; et/ou

au moins soit la première valeur de décalage (B1), soit la deuxième valeur de décalage (B2) est une fonction d'au moins : soit un poids du véhicule (300), soit une vitesse à laquelle le véhicule (300) entre sur le pont bascule (102), soit une vitesse à laquelle le véhicule (300) quitte le pont bascule (102), soit une direction dans laquelle le véhicule (300) entre sur le pont bascule (102), soit une direction dans laquelle le véhicule (300) quitte le pont bascule (102).

7. Dispositif de traitement (400) selon la revendication 5 ou 6 lorsqu'elles sont dépendantes de la revendication 3 ou 4, configuré de façon à exécuter au moins une des opérations suivantes :

   déterminer le premier signal de seuil ($Th$1) en se basant sur le premier signal filtré ($Pks$) additionné ou soustrait avec la première valeur de décalage (B1) ; et
   déterminer le deuxième signal de seuil ($Th$2) en se basant sur le deuxième signal filtré ($Aks$) additionné ou soustrait avec la deuxième valeur de décalage (B2).

8. Dispositif de traitement (400) selon l'une quelconque des revendications précédentes, dans lequel le premier signal de détection de positionnement d'essieu ($Pks$) indique quand les roues du véhicule (300) entrent dans un premier côté (104) indépendamment de quand le deuxième signal de détection de positionnement d'essieu ($Aks$) indique quand les roues du véhicule (300) quittent un deuxième côté (106), et vice versa.

9. Dispositif de traitement (400) selon l'une quelconque des revendications précédentes, configuré de façon à

   rejeter des échantillons du signal de poids ($W$) pendant la première période de temps transitionnelle ($T$1) ;
   rejeter des échantillons du signal de poids ($W$) pendant la deuxième période de temps transitionnelle ($T$2).

10. Dispositif de traitement (400) selon la revendication 9, configuré de façon à :

    rejeter des échantillons du signal de poids ($W$) pendant la première période de temps transitionnelle ($T$1) prolongée d'une première quantité ($Dl$) ;
    rejeter des échantillons du signal de poids ($W$) pendant la deuxième période de temps transitionnelle ($T$2) prolongée d'une deuxième quantité (D2).

11. Dispositif de traitement (400) selon la revendication 10, dans lequel :

    la première quantité ($D$1) est proportionnelle à la première période de temps transitionnelle ($T$1) ;
    la deuxième quantité ($D$2) est proportionnelle à la deuxième période de temps transitionnelle ($T$2).

12. Procédé pour un dispositif de traitement (400), ce procédé (500) comprenant :

    l'obtention (502) d'un premier signal de détection de positionnement d'essieu ($Pks$) indiquant quand les roues d'un véhicule (300) entrent dans un premier côté (104) d'un pont bascule (102), ce premier côté (104) étant un côté d'entrée pour le véhicule (300),
    la détermination (504) d'un premier signal de seuil (Th1) en se basant sur le premier signal de détection de positionnement d'essieu ($Pks$),
    la détermination d'au moins une première période de temps transitionnelle ($T$1) lorsque les roues du véhicule (300) entrent dans le premier côté (104) en se basant sur le premier signal de détection de positionnement d'essieu ($Pks$) et sur le premier signal de seuil ($Th$1) ; et
    l'obtention (512) d'un deuxième signal de détection de positionnement d'essieu ($Aks$) indiquant quand les roues du véhicule (300) quittent un deuxième côté (106) du pont bascule (102), ce deuxième côté (106) étant un côté de sortie pour le véhicule (300),
    la détermination (514) d'un deuxième signal de seuil ($Th$2) en se basant sur le deuxième signal de détection de positionnement d'essieu ($Aks$),
    la détermination (516) d'au moins une deuxième période de temps transitionnelle (T2) lorsque les roues du véhicule (300) quittent le deuxième côté (106) en se basant sur le deuxième signal de détection de positionnement d'essieu ($Aks$) et sur le deuxième signal de seuil ($Th$2) ;
    l'obtention d'échantillons d'un signal de poids ($W$) associé au premier signal de détection de positionnement d'essieu ($Pks$) et au deuxième signal de détection de positionnement d'essieu ($Aks$) ;

le rejet d'échantillons du signal de poids (*W*) en se basant sur la première période de temps transitionnelle (*T*1) ;

le rejet d'échantillons du signal de poids (*W*) en se basant sur la deuxième période de temps transitionnelle (*T*2) ; et

le calcul d'au moins soit un poids d'essieu pour le véhicule (300), soit un poids total pour le véhicule (300) en se basant sur les échantillons non rejetés du signal de poids (*W*).

13. Programme informatique avec un code de programme pour exécuter un procédé selon la revendication 12 lorsque ce programme est exécuté sur un ordinateur.

Fig. 1

Fig. 2

500a

| 502 |
| 504 |
| 506 |

500b

| 512 |
| 514 |
| 516 |

Fig. 3

Fig. 4

Fig. 5

Fig. 6

**EP 3 622 260 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012145557 A